# EUROPÄISCHE PATENTSCHRIFT

(11) **EP 1 914 120 B1**
(45) Veröffentlichungstag und Bekanntmachung des Hinweises auf die Patenterteilung: **21.01.2015**
(21) Anmeldenummer: 07118856.9
(22) Anmeldetag: 19.10.2007
(51) Int. Cl.: B60R 13/04, B60R 19/44, B05B 13/02, B05C 13/00, F16B 5/00, B60R 19/24

(54) **Anordnung zur Befestigung und/oder Behandlung zweier Fahrzeugteile**
Assembly for mounting and/or processing two vehicle parts
Agencement de fixation et/ou de traitement de deux pièces de véhicule

(30) Priorität: 20.10.2006 DE 102006050391
(43) Veröffentlichungstag der Anmeldung: 23.04.2008
(73) Patentinhaber: Faurecia Exteriors GmbH, 31655 Stadthagen (DE); Dr.Ing. H.C. F. Porsche Aktiengesellschaft, 70435 Stuttgart (DE)
(72) Erfinder: Kunz, Andrea, 91781, Weißenburg (DE); Rogner, Gert, 75196, Remchingen (DE)
(74) Vertreter: Tischner, Oliver

(56) Entgegenhaltungen:
- EP-A- 1 512 582
- DE-A1- 10 250 392
- DE-A1- 19 923 030
- DE-U1-202005 002 907
- US-A- 3 074 134

## Beschreibung

Die Erfindung betrifft eine Anordnung nach dem Oberbegriff des Anspruches 1.

Bauteile, die im End- oder Auslieferzustand miteinander verbaut sind, werden oft in getrennten Prozessschritten bearbeitet oder behandelt, obwohl die Prozessschritte sich gleichen, z. B. Lackieren eines Fahrzeugverkleidungsteils und eines Anbauteils getrennt voneinander. Dabei müssen unterschiedliche Vorrichtungen, z. B. Lackiergestelle, vorgehalten werden. Gerade beim Lackierprozess ist es schwierig, die Farbtonunterschiede zwischen in getrennten Prozessen lackierten Bauteilen, die im Endzustand miteinander verbaut sind, so gering wie möglich zu halten.

In den Schutzrechten DE 199 23 030 C2, DE 44 34 210 A1 oder JP 63-175666 A sind Anwendungen beschrieben, bei denen Stoßfängerhüllen mit Stoß- oder Schutzleisten gemeinsam lackiert werden, wobei die Stoßleisten vorarretiert werden (bei DE 199 23 030 C2 mit separaten Sicherungsklammern, bei DE 44 43 210 A1 mit länglichen Halte- und Rastelementen und bei JP 63-175666 A mit Steckzapfen an der Stoßleiste und mit zwei Verjüngungsbereichen in axialer Richtung). Nach dem Lackiervorgang werden die Vorarretierungen entfernt bzw. gelöst und die Stoßleiste in die Endposition gebracht und dort verrastet.

Das Patent EP 0 703 008 B1 beschreibt ein Verfahren, bei dem die Anbauteile vor dem Lackierprozess mit einem geringen Abstand zum Verkleidungsteil vorarretiert werden, nach dem Lackieren wieder für weitergehende Behandlungen demontiert und im anschließenden Montageprozess endgültig in die vorgesehene Endarretierung gebracht werden.

Eine gattungsbildende Anordnung zeigt die EP 1 512 582 A1.

Die Prozesskette des fertigen Zusammenbaus ist teurer und aufwendiger bei getrennter Bearbeitung und Behandlung. Zum Beispiel ergibt sich zwangsläufig ein höherer Verbrauch des Behandlungsmediums (z. B. Primer, Lack) und ein höherer Bedarf an Montage- und Hilfsvorrichtungen. Auch die höheren Montagezeiten, als bei der Bearbeitung und Behandlung im Verbund, sind dabei oft die Kostentreiber.

Der Erfindung liegt die Aufgabe zugrunde, eine Anordnung zur Bearbeitung und/oder Behandlung eines Fahrzeugverkleidungsteils zusammen mit einem Anbauteil nach dem Oberbegriff des Anspruchs 1 so zu verbessern, dass keine zusätzlichen Sicherungshilfsmittel zur Vorarretierung erforderlich sind und sowohl die Vor-, als auch die Endarretierung leicht und schnell zu bewerkstelligen sind.

Erfindungsgemäß wird diese Aufgabe durch die Merkmale des Anspruchs 1 gelöst.

Dadurch, dass die Befestigungsmittel als Schnappverbindung mit einer Vorarretierung und einer Endarretierung und einteilig mit dem Fahrzeugverkleidungsteil und/oder dem Anbauteil ausgebildet sind, ist eine Anordnung zur Bearbeitung und/oder Behandlung eines Fahrzeugverkleidungsteils zusammen mit einem Anbauteil so verbessert, dass keine zusätzlichen Teile erforderlich sind und die Vorarretierung und Endarretierung leicht und schnell zu bewerkstelligen ist.

Es werden also anbauteilseitig Befestigungsmittel in Form einer Schnappverbindung mit einer Vorarretierung und einer Endarretierung, realisiert. Diese Befestigungselemente sind einteilig mit dem Anbauteil, bzw. dem Fahrzeugverkleidungsteil ausgeführt. Diese Ausführung ermöglicht eine einfache und schnelle Vor- und Endarretierung der jeweiligen Anbauteile sowie eine Lackierung von Stoßfängern und Anbauteilen in einem Prozessschritt, ohne die Verwendung zusätzlicher Sicherungshilfsmittel zur Vorarretierung.

Dabei sind die Befestigungsmittel Erweiterungen (auch als Schnapphaken bezeichnet) an einem Teil, die in passende Öffnungen am anderen Teil einschnappbar sind und sind auf den Erweiterungen eine erste Raststufe zum Einschnappen in eine Vorarretierung und eine zweite Raststufe zum Einschnappen in die Endarretierung angeordnet.
An den Schnapphaken sind also auf der Oberseite eine erste Raststufe, zur Vorarretierung des Anbauteils, sowie eine zweite Raststufe zum Einschnappen in die Endarretierung vorgesehen.

Zudem sind an der Unterseite der Erweiterungen (bzw. der Schnapphaken) im Bereich der ersten Raststufe Rippen angeordnet, auf denen die Erweiterung gleiten kann, so dass ein Einschieben in die Öffnungen am anderen Teil vereinfacht ist und diese Rippen ebenfalls der Fixierung im vorarretierten Zustand dienen.

Dadurch kann der Schnapphaken einfach in die Öffnung am anderen Teil eingeführt werden. Durch die angeformten Rippen wird eine Auflagefläche geschaffen, die den Schnapphaken von der Unterseite in seiner vorverrasteten Position fixiert. Neben dem ersten Rastelement dienen also ebenfalls die angeformten Rippen der Vorarretierung des Anbauteils. Um ein unbeabsichtigtes Arretieren in der Endposition zu vermeiden ist bevorzugt an der Öffnung des Fahrzeugverkleidungsteils ein Hinterschnitt vorgesehen, der ein einfaches Einschieben des Anbauteils verhindert. Durch weitere seitliche Führungen an der Öffnung erfolgt eine genau Positionierung.

Um eine Endarretierung zu realisieren sind neben den am Anbauteil vorgesehenen zweiten Rastelementen Abstimmungsrippen an der Öffnung des Fahrzeugverkleidungsteils angeordnet, die lediglich im endgültig verrasteten Zustand unter das Anbauteil greifen und dieses fixieren. Die Abstimmungsrippen sind am Fahrzeugverkleidungsteils vorgesehen und sind beidseitig neben den jeweiligen Öffnungen für die Schnapphaken angebracht.

Vorteilhaft sind die Erweiterungen am Anbauteil und die Öffnungen im Fahrzeugverkleidungsteil angeordnet.

Bevorzugt ist die Bearbeitung und/oder Behandlung ein Lackieren, mit allen vorgelagerten Bearbeitungsschritten (z. B. Powerwash oder Aktivierung der Oberfläche).

In einer weiteren Ausgestaltung der Erfindung ist die Endarretierung mehrstufig ausgeführt. Hierdurch kann bei Bedarf eine Abstimmung oder eine Justierung der beiden Bauteile zueinander bei der Montage vorgenommen werden. Erfolgt die Befestigung über die beschriebenen Raststufen, so ist die zweite Raststufe mehrstufig ausgebildet.

In einer Ausführungsform ist das Fahrzeugverkleidungsteil ein Stoßfänger und das Anbauteil ein aerodynamisches Bauteil, wie ein Spoiler, eine Spoilerblende, Radlaufverbreiterungen oder ein aerodynamischer Flügel.

Die Erfindung zeichnet sich daher in einer bevorzugten Ausführungsform durch eine Vorarretierung des Aerodynamikbauteils am Fahrzeugverkleidungsteil, zum Beispiel einem Stoßfänger aus. In dieser Vorarretierung ist das Anbauteil mit Abstand zum Stoßfänger so angeordnet, dass eine problemlose Lackierung beider Teile möglich ist. Beim Lackieren durchlaufen beide Teile im vorarretierten Zustand die Lackieranlage. Anschließend, dies kann unmittelbar nach dem Lackieren oder auch später geschehen, wird das Aerodynamikbauteil von der Vorarretierung in die Endarretierung verschoben. Sowohl die Vorarretierung als auch die Endarretierung werden durch eine Schnappverbindung über eine erste und eine zweite Raststufe erreicht. Es werden keine weiteren Hilfsmittel bzw. Zusatzbauteile benötigt. Auch eine Demontage der gemeinsam lackierten Bauteile vor dem entgültigen Zusammenbau ist nicht erforderlich.

Nachfolgend wird die Erfindung anhand von vier Figuren näher erläutert.

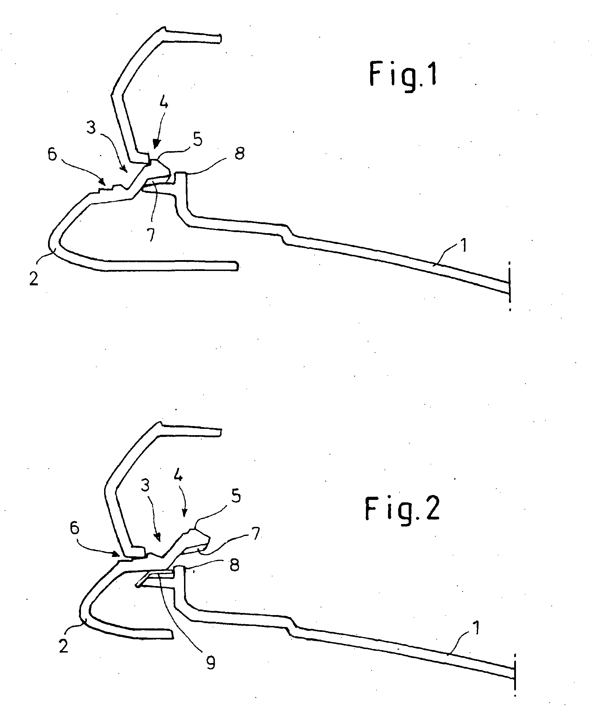

Figur 1 zeigt in einem Schnitt ein Fahrzeugverkleidungsteil 1, hier ein Stoßfänger bzw. seine Außenhaut und ein Anbauteil 2, hier einen Spoiler oder eine Spoilerblende, in der Vorarretierung, bei der das Anbauteil 2 in Abstand vom Fahrzeugverkleidungsteil 1 angeordnet ist. In dieser Vorarretierung werden beide Teile gleichzeitig lackiert. Ein konstruktiv am Fahrzeugverkleidungsteil 1 vorgesehener Hinterschnitt 8 soll gewährleisten, dass das Anbauteil 2 nicht vor oder während der Lackierung unbeabsichtigt in den endgültig verrasteten Zustand geschoben wird.

Diese Vorarretierung erfolgt über Befestigungsmittel, die als Schnappverbindung einteilig mit den Anbauteilen ausgebildet sind.

Das Anbauteil weist hierzu Erweiterungen 3 auf, die in entsprechende Öffnungen 4 am Fahrzeugverkleidungsteil 1 eingeschoben werden. Auf der Erweiterung 3 sind eine erste Raststufe 5 zum Einschnappen in die Vorarretierung und eine zweite Raststufe 6 zum Einschnappen in die Endarretierung angeordnet.

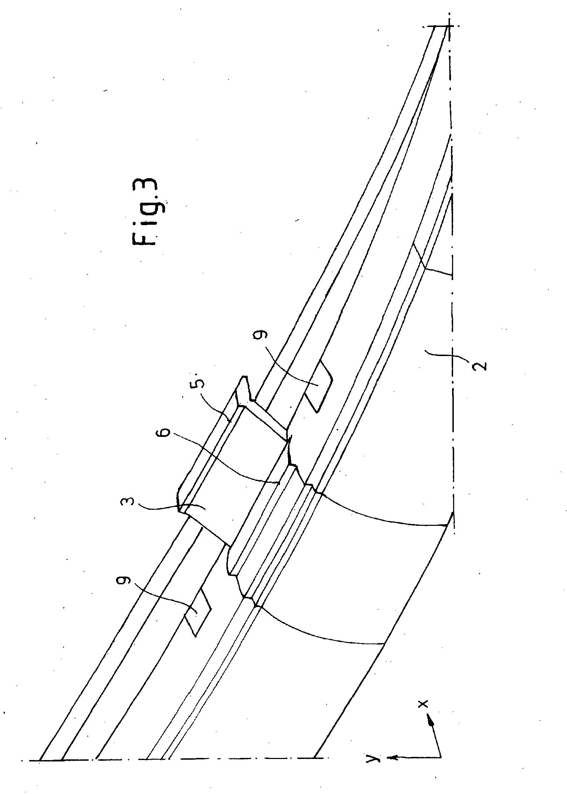

Figur 2 zeigt im selben Schnitt wie Figur 1 die Endarretierung des Anbauteils 2 am Fahrzeugverkleidungsteil 1. Die erste Raststufe 5 an der Erweiterung 3 ist in das Fahrzeugverkleidungsteil 1 eingeschoben worden und die zweite Raststufe 6, sowie am Fahrzeugverkleidungsteil 1vorgesehene Abstimmungsrippen 9 verankern das Anbauteil 2 in der Endarretierung. Um die Lage der Abstimmungsrippen 9 darzustellen sind diese ebenfalls in Figur 3 skizziert. In dieser Endarretierung kann das Fahrzeugverkleidungsteil 1 an den Kunden ausgeliefert bzw. am Fahrzeug montiert werden. Figur 2 zeigt auch sehr gut die an der Unterseite der ersten Raststufe angeordneten Rippen 7, über die die Erweiterung 3 des Anbauteils einfach in die Öffnung eingeführt werden kann und die ebenfalls der Fixierung des Anbauteils im vorverrasteten Zustand dienen.

Figur 3 zeigt eine Ansicht des Anbauteils 2 mit der Erweiterung 3 auf der eine erste Raststufe 5 und eine zweite Raststufe 6 angeordnet sind. Die Erweiterung 3 ist an die Öffnungen 4 im Fahrzeugverkleidungsteil 1 anzupassen oder umgekehrt, so dass eine Verrastung in einer Vorarretierung und einer Endarretierung erfolgen kann.

Die Erweiterung 3 ist bevorzugt zusammen mit dem Anbauteil in einem Pressvorgang hergestellt.

Die Öffnung 4 im Fahrzeugverkleidungsteil 1 muss einerseits ein Einschieben der Erweiterung 3 als auch eine Verrastung in zwei Raststufen 5, 6 ermöglichen.

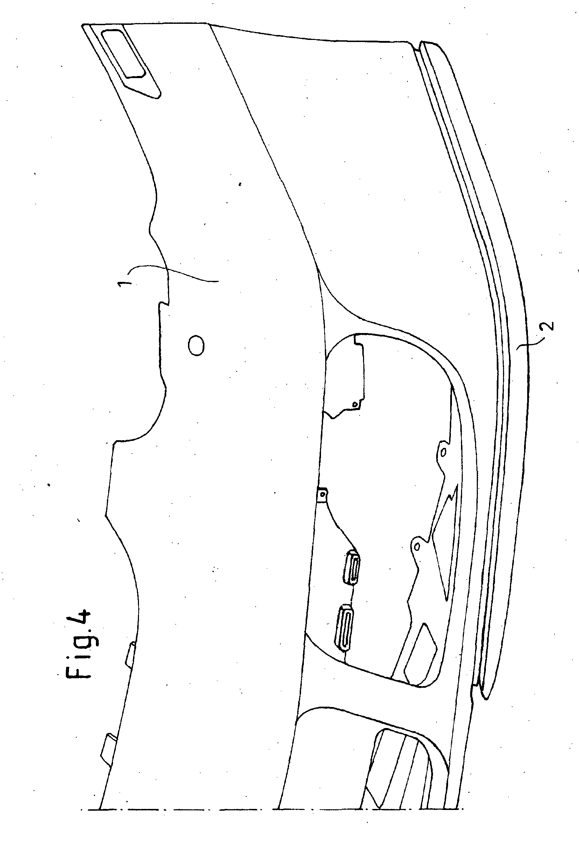

Figur 4 zeigt eine Ansicht eines Fahrzeugverkleidungsteils 1, hier ein Stoßfänger, mit einem Anbauteil 2, hier ein Spoiler, in der Vorarretierung, bei der das Anbauteil 2 mit Abstand zum Fahrzeugverkleidungsteil 1 angeordnet ist.

Durch die Vorarretierung ist das Anbauteil 2 mit Abstand zum Fahrzeugverkleidungsteil 1 angeordnet, so dass beim Lackieren auch die Kanten des Anbauteils 2 lackiert werden. Ein Lackierschatten ist dadurch verhindert.

## Patentansprüche

1. Anordnung zur Bearbeitung und/oder Behandlung eines Fahrzeugverkleidungsteils (1) zusammen mit einem Anbauteil (2), bei welchem die Teile (1, 2) vor der Bearbeitung und/oder Behandlung einander zugeordnet und mittels Befestigungsmittel im Abstand voneinander vorarretiert sind und anschließend gemeinsam bearbeitbar und/oder behandelbar sind und nach der Bearbeitung und/oder Behandlung in Endstellung aneinander arretiert sind, wobei die Befestigungsmittel als Schnappverbindung mit einer Vorarretierung und einer Endarretierung und einteilig mit dem Fahrzeugverkleidungsteil (1) und/oder dem Anbauteil (2), ausgebildet sind und die Befestigungsmittel Erweiterungen (3) an einem Teil (1, 2) sind, die in passende Öffnungen (4) am anderen Teil (2, 1) einschnappbar sind und auf den Erweiterungen eine erste Raststufe (5) zum Einschnappen in die Vorarretierung und eine zweite Raststufe (6) zum Einschnappen in die Endarretierung angeordnet sind und die erste Raststufe (5) auf der Oberseite der Erweiterungen angeordnet ist, **dadurch gekennzeichnet, dass** an der Unterseite der Erweiterungen (3) im Bereich der ersten Raststufe (5) Rippen (7) angeordnet sind, auf denen die Erweiterung (3) gleiten kann, so dass ein Einschieben in die Öffnungen (4) am anderen Teil vereinfacht ist und diese Rippen (7) ebenfalls der Fixierung im vorarretierten Zustand dienen.

2. Anordnung nach Anspruch 1, **dadurch gekennzeichnet, dass** die Erweiterungen (3) am Anbauteil (2) und die Öffnungen (4) im Fahrzeugverkleidungsteil (1) angeordnet sind.

3. Anordnung nach Anspruch 1 oder 2, **dadurch gekennzeichnet, dass** die Bearbeitung und/oder Behandlung ein Lackieren ist.

4. Anordnung nach einem der Ansprüche 1 bis 3, **dadurch gekennzeichnet, dass** das Fahrzeugverkleidungsteil (1) ein Stoßfänger ist.

5. Anordnung nach einem der Ansprüche 1 bis 4, **dadurch gekennzeichnet, dass** das Anbauteil (2) ein aerodynamisches Bauteil ist, wie ein Spoiler, eine Spollerblende, Radlaufverbreiterungen oder ein aerodynamischer Flügel.

6. Anordnung nach einem der Ansprüche 1 bis 5, **dadurch gekennzeichnet, dass** Abstimmungsrippen (9) an der Öffnung des Fahrzeugverkleidungsteils (1) angeordnet sind, die lediglich im endgültig verrasteten Zustand unter das Anbauteil (2) greifen und dieses fixieren.

7. Anordnung nach einem der Ansprüche 1 bis 6, **dadurch gekennzeichnet, dass** die Endarretierung mehrstufig ausgeführt ist.

## Claims

1. An assembly for processing and/or treatment of a motor vehicle paneling part (1) together with an add-on component (2), in which the parts (1, 2) are associated with each other before the processing and/or treatment and are preliminarily locked by means of fastening means at a distance from each other and can subsequently be processed and/or treated jointly and after the processing and/or treatment are locked against each other in the end position, wherein the fastening means are designed as snap connections with a preliminary locking and a final locking and as one-piece with the motor vehicle paneling part (1) and/or the add-on component (2) and the fastening means are extensions (3) of one part (1, 2), which can be snapped into place in suitable openings (4) on the other part (2, 1) and a first latching stage (5) for the snapping into the preliminary locking and a second latching stage (6) for the snapping into the final locking are arranged on the extensions and the first latching stage (5) is arranged on the top side of the extensions, **characterized in that** on the lower side of the extensions (3) in the area of the first latching stage (5) ribs (7) are arranged, on which the extensions (3) can slide, so that an insertion into the openings (4) on the other part is simplified and said ribs (7) also serve the fixing in the preliminary locking state.

2. An assembly according to claim 1, **characterized in that** the extensions (3) are arranged on the add-on part (2) and the openings (4) in the motor vehicle paneling part (1).

3. An assembly according to claim 1 or 2, **characterized in that** the processing and or treatment is a painting.

4. An assembly according to one of claims 1 to 3, **characterized in that** the motor vehicle paneling part (1) is a bumper.

5. An assembly according to one of claims 1 to 4, **characterized in that** the add-on component (2) is an aerodynamic component, such as a spoiler, a spoiler panel, wheel arch extensions or an aerodynamic wing.

6. An assembly according to one of claims 1 to 5, **characterized in that** coordination ribs (9) are arranged on the opening of the motor vehicle paneling part (1), which only engage in the finally locked in place state under the add-on part (2) and fix the latter.

7. An assembly according to one of claims 1 to 6, **characterized in that** the final locking is carried out in multiple stages.

## Revendications

1. Agencement permettant le façonnage et/ou le traitement d'une pièce de parement (1) pour véhicule automobile conjointement avec une pièce rapportée (2), dans lequel les pièces (1, 2), avant le façonnage et/ou le traitement, sont associées l'une à l'autre et sont bloquées à distance l'une de l'autre dans une position préalable par des moyens de fixation et, ensuite, peuvent être façonnées et/ou traitées conjointement, et après le façonnage et/ou le traitement sont bloquées l'une contre l'autre dans une position finale, les moyens de fixation étant configurés pour un assemblage par encliquetage avec un blocage préalable et un blocage final et étant configurés d'un seul tenant avec la pièce de parement (1) et/ou la pièce rapportée (2), et les moyens de fixation étant des extensions (3) sur une pièce (1, 2), qui peuvent s'encliqueter dans des ouvertures (4) adaptées sur l'autre pièce (2, 1), et un premier épaulement d'encliquetage (5) pour l'encliquetage dans la position de blocage préalable et un deuxième épaulement d'encliquetage (6) pour l'encliquetage dans la position de blocage final étant réalisés sur lesdites extensions, et le premier épaulement d'encliquetage étant réalisé sur la face supérieure desdites extensions, **caractérisé en ce que** sur la face inférieure des extensions (3), dans la zone du premier épaulement d'encliquetage (5), sont agencées des nervures (7), sur lesquelles l'extension (3) peut glisser, de telle sorte qu'une introduction dans les ouvertures (4) sur l'autre pièce est facilitée, et lesdites nervures (7) sont également destinées à la fixation dans la position de blocage préalable.

2. Agencement selon la revendication 1, **caractérisé en ce que** les extensions (3) sont agencées sur la pièce rapportée (2) et les ouvertures (4) sont agencées sur la pièce de parement (1).

3. Agencement selon la revendication 1 ou 2, **caractérisé en ce que** le façonnage et/ou le traitement sont un processus de peinture.

4. Agencement selon l'une quelconque des revendications 1 à 3, **caractérisé en ce que** la pièce de parement (1) est un pare-chocs.

5. Agencement selon l'une quelconque des revendications 1 à 4, **caractérisé en ce que** la pièce rapportée (2) est une pièce aérodynamique, tel qu'un spoiler, un cache de spoiler, des élargissements de passage de roue ou une aile aérodynamique.

6. Agencement selon l'une quelconque des revendications 1 à 5, **caractérisé en ce que** des nervures d'ajustement (9) sont agencées dans l'ouverture de la pièce de parement (1), lesquelles, uniquement dans la position bloquée finale, s'engagent en dessous de la pièce rapportée (2) et fixent celle-ci.

7. Agencement selon l'une quelconque des revendications 1 à 6, **caractérisé en ce que** le blocage final est réalisé de manière étagée.
